(19) Europäisches Patentamt
European Patent Office
Office européen des brevets

(11) **EP 1 916 048 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***B23K 9/29*** *(2006.01)*      ***B23K 26/14*** *(2006.01)*

(21) Anmeldenummer: **06026335.7**

(22) Anmeldetag: **19.12.2006**

(54) **Düse zur industriellen Bearbeitung**

Nozzle for industrial machining

Buse pour operations d'usinage industriel

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.10.2006 DE 102006050059**

(43) Veröffentlichungstag der Anmeldung:
**30.04.2008 Patentblatt 2008/18**

(73) Patentinhaber: **Linde AG**
**80331 München (DE)**

(72) Erfinder: **Danzer, Wolfgang, Dr.**
**84405 Dorfen (DE)**

(56) Entgegenhaltungen:
**EP-A- 0 094 984      EP-A2- 0 331 536**
**DE-A1- 19 920 930**

## Beschreibung

Die vorliegende Erfindung betrifft eine Düse mit mindestens einem zentralen Düsenkanal, durch den

- mindestens ein für ein Autogenverfahren, für ein Laserstrahlverfahren und/oder für das Lichtbogenschweißen bestimmter Strahl sowie
- mindestens ein Gasstrom

führbar sind, wobei die Kontur des Düsenkanals zwei unmittelbar oder über eine Zwischengerade ineinander übergehende Kurven aufweist, von welchen Kurven

- die in Richtung des Gasstroms erste Kurve von der sich in Richtung des Gasstroms erstreckenden Zentralachse des Düsenkanals aus gesehen konkav gekrümmt ist und
- die in Richtung des Gasstroms zweite Kurve von der Zentralachse des Düsenkanals aus gesehen konvex gekrümmt ist
- der Düsenkanal seinen geringsten Durchmesser am Gasstromaustritt aufweist.

## Stand der Technik

Eine Gasdüse zum Zuführen von Gas, insbesondere von mindestens einem Schutzgas oder von mindestens einem Schneidgas, an seinen Verwendungsort beim Schneiden oder beim Schweißen ist beispielsweise aus der Druckschrift DE 20 2004 011 430 U1 oder der EP 0 094 984 bekannt.

Beim Einsatz von Gasen bei der Materialbearbeitung besteht ein prinzipielles technisches Problem darin, wie effizient und mit welcher Methode das Gas an den Prozessort gebracht wird. Beispielsweise soll das Gas beim Schweißen möglichst gut den Schweißort abdecken, und beim Schneiden soll das Gas das geschmolzene Material gezielt über Krafteinwirkung aus der Schnittfuge austreiben.

Hierbei wird versucht, die jeweils ideale Düse für die jeweilige Anwendung einzusetzen .So werden zum Beispiel beim autogenen Brennschneiden verschiedene Düsenformen eingesetzt, um einen optimalen Wirkungsgrad der Gaszufuhr zu erreichen. Hauptziel dabei ist, dass das Schneidgas bei verschiedenen Drücken und Durchflußmengen wirbelfrei, laminar und zylindrisch aus der Schneiddüse austritt.

Eine Gasdüse zum Schutzgasschweißen ist beispielsweise aus der Druckschrift DD-PS 133 537 bekannt. Diese bekannte Gasdüse weist zur Erzielung eines homogenen Gasstroms einen ringförmigen Verteilungskanal auf.

Zum Laserstrahlschweißen oder zum Laserstrahlschneiden ist aus der Druckschrift DE 40 16 200 A1 eine sich in Richtung des Gasaustritts verjüngende Gasdüse bekannt.

Ferner ist aus den Druckschriften EP 0 458 180 A2, EP 1 018 394 A2 und JP 56136295 A bekannt, zum Laserstrahlschweißen oder zum Laserstrahlschneiden eine sogenannte Lavaldüse zu verwenden. Der Querschnitt der Lavaldüse verengt sich zunächst und weitet sich bis zum Gasaustritt wieder auf, wodurch ein durchströmendes Gas auf Überschallgeschwindigkeit beschleunigt werden kann, ohne dass es zu starken Verdichtungsstößen kommt.

Eine Gasdüse gemäß dem Oberbegriff des Anspruchs 1 ist aus der Druckschrift DE 689 06 429 T2 bekannt. Der Querschnitt dieser Gasdüse weitet sich ähnlich wie bei einer Lavaldüse am Gasaustritt wieder auf.

Die vorstehend genannten Düsen sind im Normalfall nicht optimiert bzw. nicht auf die jeweils gewünschte Anwendung abgestimmt. So führt eine Erhöhung des Gasdrucks bei den vorstehend beschriebenen Gasdüsen dazu, dass das Gas nicht laminar aus der Düse ausströmt, sondern am Gasaustritt zur Seite ausweicht und dort zu Verwirbelungen führt.

## Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Düse der eingangs genannten Art so weiterzubilden, dass der Gasstrom auch bei Änderung des Gasdrucks innerhalb mindestens eines weiten Druckbereichs laminar und nahezu ohne Druckentspannung am Gasaustritt ausströmt, insbesondere dass die Düse über weite Druckbereiche bei verschiedenen Anwendungen einsetzbar ist.

Diese Aufgabe wird durch eine Düse mit den im Anspruch 1 angegebenen Merkmalen gelöst. Vorteilhafte Ausgestaltungen und zweckmäßige Weiterbildungen der vorliegenden Erfindung sind in den Unteransprüchen gekennzeichnet.

Mithin basiert die vorliegende Erfindung auf einer fluidmechanischen Optimierung der Düsenform, insbesondere auf der Bereitstellung einer Windkanaldüse zum Einsatz bei der Materialbearbeitung.

Mit der Düsenform gemäß der vorliegenden Erfindung wird der vor der Düse liegende Gasdruck beispielsweise aus mindestens einer Gasflasche oder aus mindestens einem Tank im Wesentlichen vollständig in laminare Bewegungsenergie umgesetzt. Hierdurch wird beim Schneiden eine bessere gasdynamische Einwirkung in der Schnittfuge und beim Schweißen eine bessere Abdeckungswirkung erreicht.

Im Gegensatz zu konventionellen Gasdüsen wird das Gas bei der Düse gemäß der vorliegenden Erfindung nicht aufgrund von statischem Druck beim Austritt aus der Düse ausgedehnt, aufgefächert oder verwirbelt.

Als weiteres vorteilhaftes Abgrenzungskriterium der vorliegenden Erfindung gegenüber dem Stand der Technik ist die Tatsache zu werten, dass beim Einsatz der fluidmechanisch optimierten Düse gemäß der vorliegenden Erfindung über weite Anwendungsbereiche hinweg mit der selben Düsenform, also mit einem Düsentyp, gearbeitet werden kann.

Die Beaufschlagung der Düse mit unterschiedlichen, insbesondere beliebigen, Gasdrücken ist möglich, denn bei der Düse gemäß der vorliegenden Erfindung strömt bei Erhöhung des Gasdrucks das Gas am Gasaustritt schneller aus und gleichzeitig bleibt die Gasaustrittsströmung laminar. So können mittels der Düse gemäß der vorliegenden Erfindung verschiedene, insbesondere auch hohe, Geschwindigkeiten der laminaren Gasaustrittsströmung erreicht werden.

Hinsichtlich der durch die vorliegende Erfindung verwirklichten Vorteile ist des Weiteren zu bemerken, dass bei Einsatz gleicher Gasmengen bei der Düse gemäß der vorliegenden Erfindung höhere Wirkungsgrade bzw. höhere Qualität und Produktivität im Vergleich zu konventionellen Düsen erhalten werden.

Gemäß einer vorteilhaften Weiterbildung der vorliegende Erfindung ist der, insbesondere ringförmige, Düsenkanal, vorzugsweise mittels mindestens eines Ringspalts,

- in mindestens einen ersten, insbesondere in Bezug auf die Zentralachse äußeren, Düsenkanal und
- in mindestens einen zweiten, insbesondere in Bezug auf die Zentralachse inneren, Düsenkanal.

unterteilt.

Hierbei ist es möglich, durch den ersten Düsenkanal mindestens einen ersten Gasstrom und durch den zweiten Düsenkanal mindestens ein zweiten Gasstrom zu führen. Der durch die Düse geführte Gasstrom kann beispielsweise aus mindestens einem Schneidhilfsgas und/oder aus mindestens einem Schutzgas bestehen. Auch Druckluft kann eingesetzt werden.

Bei Einsatz einer Ringspaltdüse kann der erste Gasstrom den zweiten Gasstrom unterstützen und dessen positive Wirkungen verstärken. Zudem können durch den Einsatz

- eines ersten Gasstroms, etwa eines inneren Ringspaltgases und
- eines vom ersten Gasstrom chemisch und/oder physikalisch verschiedenen zweiten Gasstroms, etwa eines äußeren Ringspaltgases

spezifische Effekte erzeugt werden.

Schließlich betrifft die vorliegende Erfindung die Verwendung mindestens einer Düse der vorstehend dargelegten Art

- bei mindestens einem Autogenverfahren, insbesondere

  -- beim Brennschneiden, zum Beispiel beim Flammhärten, beim Flammlöten, beim Flammrichten, beim Flammstrahlen, beim Flammwärmen, beim Fugenhobeln und/oder beim Gasschweißen, und/oder
  -- beim thermischen Spritzen, zum Beipiel beim Flammspritzen, wie etwa beim Hochgeschwindigkeits-Flammspritzen, beim Kaltgasspritzen, beim Lichtbogenspritzen und/oder beim Plasmaspritzen, und/oder

- bei mindestens einem Laserstrahlverfahren, insbesondere beim Laserlöten, beim Laserschneiden, wie etwa beim Laserschmelzschneiden, beim Laserschweißen und/oder beim Laserspritzen, und/oder
- beim Lichtbogenfügen, insbesondere beim Lichtbogenlöten, beim Lichtbogenschweißen, beim Plasmaschneiden und/oder beim Plasmaschweißen, beispielsweise beim M[etall]A[ktiv]G[as]-Schweißen, beim M[etall]I[nert]G[as]-Schweißen oder beim W[olfram]I[nert]G[as]-Schweißen.

Die Düse der vorstehend dargelegten Art kann ferner auch bei weiteren, vorstehend nicht explizit aufgeführten Autogenprozessen verwendet werden.

**Kurze Beschreibung der Zeichnungen**

Es zeigt:

Fig. 1A      in perspektivischer Darstellung ein Ausführungsbeispiel einer Düse gemäß der vorliegenden Erfindung;

Fig. 1B      in Querschnittdarstellung eine Düse gemäß dem Stand der Technik;

Fig. 2      in diagrammatischer Darstellung die Kontur der Düse aus Fig. 1A, wobei der Radius des Düsenkanals in Abhängigkeit vom jeweiligen Punkt auf der Zentralachse wiedergegeben ist; und

Fig. 3      die laminare Strömung des aus der Düse aus Fig. 1A ausströmenden Gases.

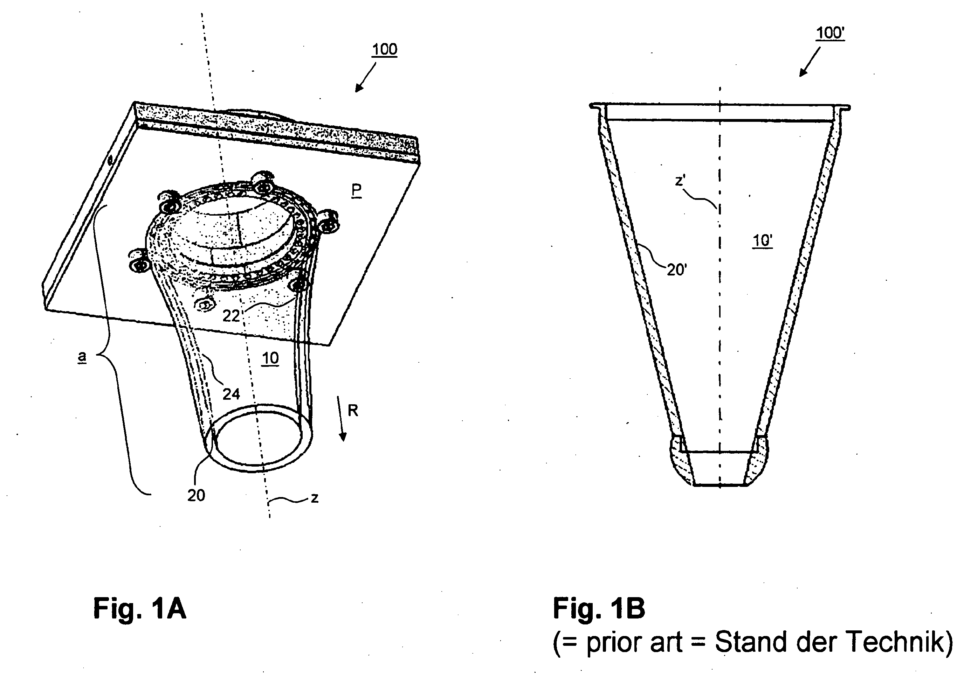

Gleiche oder ähnliche Ausgestaltungen, Elemente oder Merkmale sind in den Fig. 1A bis Fig. 3 mit identischen Bezugszeichen versehen.

**Bester Weg zur Ausführung der Erfindung**

Das anhand Fig. 1A, Fig. 2, Fig. 3 veranschaulichte Ausführungsbeispiel der vorliegenden Erfindung zeigt eine Düse 100 mit einem zentralen Düsenkanal 10, durch den

-   mindestens ein für ein Autogenverfahren, für ein Laserstrahlverfahren und/oder für das Lichtbogenfügen bestimmter Strahl sowie
-   mindestens ein Gasstrom

führbar sind.

Der Düsenkanal 10 verjüngt sich in Richtung R des Gasstroms auf gesamter Länge a und weist demzufolge seinen geringsten Durchmesser $2 \cdot r_7$ am Gasstromaustritt auf. Der Anfangsdurchmesser $2 \cdot r_0$ des Düsenkanals 10 am Gasstromeintritt ist somit größer als der Enddurchmesser $2 \cdot r_7$ des Düsenkanals 10 am Gasstromaustritt, wobei der Endradius $r_7$ der kleinste Radius des Düsenkanals 10 ist.

Das in Fig. 1A dargestellte Ausführungsbeispiel einer Düse 100 gemäß der vorliegenden Erfindung unterscheidet sich von der in Fig. 1B dargestellten Düse 100' aus dem Stand der Technik durch die jeweilige Kontur 20 des Düsenkanals 10, wobei die in Fig. 1A dargestellte Düse 100 zwei unmittelbar ineinander übergehende Kurven 22, 24 aufweist.

Von diesen Kurven 22, 24 ist

-   die in Richtung R des Gasstroms erste Kurve 22 von der sich in Richtung R des Gasstroms erstreckenden Zentralachse z des Düsenkanals 10 aus gesehen konkav gekrümmt und
-   die in Richtung R des Gasstroms zweite Kurve 24 von der Zentralachse z des Düsenkanals 10 aus gesehen konvex gekrümmt.

Dabei ist die Ausdehnung der ersten Kurve 22 entlang der Zentralachse z geringer als die Ausdehnung der zweiten Kurve 24 entlang der Zentralachse z.

Der Radius r(z) des Düsenkanals 10 steht im Bereich der Zentralachse z in einer definierten Beziehung

-   zum Anfangsradius $r_0$ des Düsenkanals 10,
-   zur sich entlang der Zentralachse z erstreckenden Länge a des Düsenkanals 10 und
-   zum Endradius $r_7$ des Düsenkanals 10.

Insbesondere lässt sich der Radius r(z) des Düsenkanals 10 im Bereich der Zentralachse z mittels der sogenannten Witoszynski-Formel berechnen, die wie folgt lautet:

$$r(z) = r_0 \cdot [1-(1-r_0^2/r_7^2) \cdot (1-3z^2/a^2)^2 \cdot (1+z^2/a^2)^{-3}]^{-1/2}$$

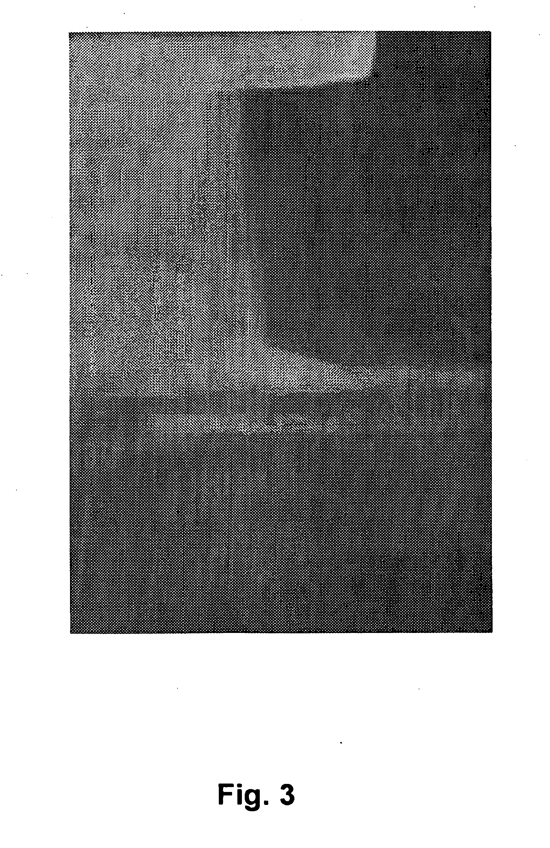

Mit dieser Formel ergeben sich Düsenkonturen, die es ermöglichen, dass das jeweilige Gas laminar und ohne statische Druckentspannung aus der Düse austreten kann. Die laminare Ausströmung des Gases ist in Fig. 3 dargestellt, wobei die Gasströmung mittels Rauch sichtbar gemacht wurde. Die Düse findet sich in der Figur oben und das Werkstück unten. Dazwischen ist der durch Rauch sichtbar gemachte laminare Gasstrom zu sehen, wobei der Rauch die Fotografie unscharf erscheinen lässt. Lediglich beim Auftreffen des laminaren Gasstroms auf das Werkstück zeigt sich eine Verbreiterung des Gasstroms, ansonsten sind keinerlei Verwirbelungen oder Abweichungen des Gasstroms von der Strömungsrichtung zu erkennen.

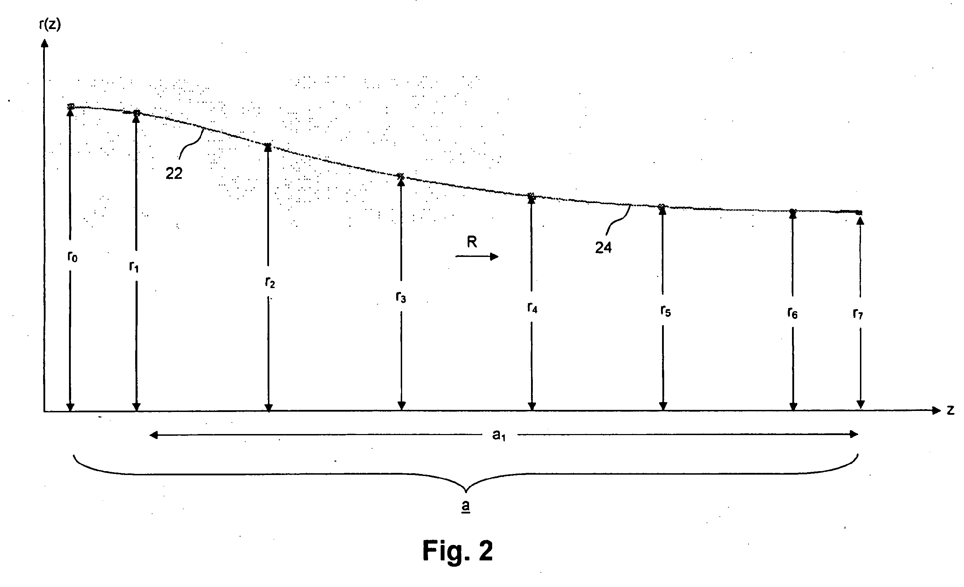

Die sich aus der Witoszynski-Formel ergebende Kontur der Düse ist in Fig. 2 dargestellt, wobei die Radien $r_0$, $r_1$, $r_2$, $r_3$, $r_4$, $r_5$, $r_6$, $r_7$ in regelmäßigen Abständen von etwa zwanzig Millimetern des Düsenkanals 10 wiedergegeben sind.

Beispielsweise beträgt

- der Anfangsradius $r_0$ des Düsenkanals etwa 35 Millimeter,
- der in Strömungsrichtung R erste Radius $r_1$ zwischen Anfangsradius $r_0$ und Endradius $r_7$ des Düsenkanals etwa 34,11 Millimeter,
- der in Strömungsrichtung R zweite Radius $r_2$ zwischen Anfangsradius $r_0$ und Endradius $r_7$ des Düsenkanals etwa 29,32 Millimeter,
- der in Strömungsrichtung R dritte Radius $r_3$ zwischen Anfangsradius $r_0$ und Endradius $r_7$ des Düsenkanals etwa 24,914 Millimeter,
- der in Strömungsrichtung R vierte Radius $r_4$ zwischen Anfangsradius $r_0$ und Endradius $r_7$ des Düsenkanals etwa 22,166 Millimeter,
- der in Strömungsrichtung R fünfte Radius $r_5$ zwischen Anfangsradius $r_0$ und Endradius $r_7$ des Düsenkanals etwa 20,687 Millimeter,
- der in Strömungsrichtung R sechste Radius $r_6$ zwischen Anfangsradius $r_0$ und Endradius $r_7$ des Düsenkanals etwa 20,066 Millimeter und
- der Endradius $r_7$ des Düsenkanals etwa zwanzig Millimeter,.

Die Düse 100 aus Fig. 1A ist an einer Platte P angebracht. Diese Platte ist jedoch weder ein notwendiger noch ein obligatorischer Bestandteil der Düse 100. Die entlang der Zentralachse z gemessene Länge $a_1$ oder Längserstreckung des Düsenkanals 10 vom Gasstromaustritt bis zur Platte P beträgt in Fig. 3 etwa 110 Millimeter.

Bezugszeichenliste

| 100 | Düse, insbesondere Windkanaldüse, gemäß vorliegender Erfindung (vgl. Fig. 1A, Fig. 2) |
|---|---|
| 100' | Düse gemäß Stand der Technik (vgl. Fig. 1B) |
| 10 | Düsenkanal der Düse 100 gemäß vorliegender Erfindung (vgl. Fig. 1A, Fig. 2) |
| 10' | Düsenkanal der Düse 100' gemäß Stand der Technik (vgl. Fig. 1B) |
| 20 | Kontur des Düsenkanals 10 gemäß vorliegender Erfindung (vgl. Fig. 1A, Fig. 2) |
| 20' | Kontur des Düsenkanals 10' gemäß Stand der Technik (vgl. Fig. 1B) |
| 22 | erste konkave Kurve der Kontur 20 des Düsenkanals 10 |
| 24 | zweite konvexe Kurve der Kontur 20 des Düsenkanals 10 |
| a | entlang der Zentralachse z gemessene Länge oder Längserstreckung des Düsenkanals 10 |
| $a_1$ | entlang der Zentralachse z gemessene Länge oder Längserstreckung des Düsenkanals 10 von der Platte P bis zum Gasaustritt |
| P | Platte |
| r | Radius des Düsenkanals 10 |
| $r_0$ | Anfangsradius des Düsenkanals 10 |
| $r_1$ | in Strömungsrichtung R erster Radius zwischen Anfangsradius $r_0$ und Endradius $r_7$ des Düsenkanals 10 |
| $r_2$ | in Strömungsrichtung R zweiter Radius zwischen Anfangsradius $r_0$ und Endradius $r_7$ des Düsenkanals 10 |
| $r_3$ | in Strömungsrichtung R dritter Radius zwischen Anfangsradius $r_0$ und Endradius $r_7$ des Düsenkanals 10 |
| $r_4$ | in Strömungsrichtung R vierter Radius zwischen Anfangsradius $r_0$ und Endradius $r_7$ des Düsenkanals 10 |
| $r_5$ | in Strömungsrichtung R fünfter Radius zwischen Anfangsradius $r_0$ und Endradius $r_7$ des Düsenkanals 10 |
| $r_6$ | in Strömungsrichtung R sechster Radius zwischen Anfangsradius $r_0$ und Endradius $r_7$ des Düsenkanals 10 |
| $r_7$ | Endradius des Düsenkanals 10 |
| $r(z)$ | Radius des Düsenkanals 10 an einem Punkt z der Zentralachse zwischen Anfangsradius $r_0$ und Endradius $r_7$ |
| R | Richtung des Gasstroms oder Strömungsrichtung |
| z | Zentralachse des Düsenkanals 10 gemäß vorliegender Erfindung |

(vgl. Fig. 1A, Fig. 2)

z'      Zentralachse des Düsenkanals 10' gemäß Stand der Technik
(vgl. Fig. 1B)

**Patentansprüche**

1.  Düse (100) mit mindestens einem zentralen Düsenkanal (10), durch den

    - mindestens ein für ein Autogenverfahren, für ein Laserstrahlverfahren und/oder für das Lichtbogenschweißen bestimmter Strahl sowie
    - mindestens ein Gasstrom

    führbar sind, wobei die Kontur (20) des Düsenkanals (10) zwei unmittelbar oder über eine Zwischengerade ineinander übergehende Kurven (22, 24) aufweist, von welchen Kurven (22, 24)

    - die in Richtung (R) des Gasstroms erste Kurve (22) von der sich in Richtung (R) des Gasstroms erstreckenden Zentralachse (z) des Düsenkanals (10) aus gesehen konkav gekrümmt ist und
    - die in Richtung (R) des Gasstroms zweite Kurve (24) von der Zentralachse (z) des Düsenkanals (10) aus gesehen konvex gekrümmt ist,
    - der Düsenkanal (10) seinen geringsten Durchmesser (2 r(z)) am Gasstromaustritt aufweist

    **dadurch gekennzeichnet,**
    **dass** der Düsenkanal (10) sich auf gesamter Länge in Richtung (R) des Gasstroms verjüngt.

2.  Düse gemäß Anspruch 1, **dadurch gekennzeichnet, dass**

    - der Düsenkanal (10) ringförmig ist und/oder

    -- der Anfangsradius ($r_0$) des Düsenkanals (10) am Gasstromeintritt größer als der Endradius ($r_7$) des Düsenkanals (10) am Gasstromaustritt ist und
    -- der Endradius ($r_7$) der kleinste Radius (r(z)) des Düsenkanals (10) ist.

3.  Düse gemäß Anspruch 1 oder 2, **dadurch gekennzeichnet, dass** die Ausdehnung der ersten Kurve (22) entlang der Zentralachse (z) geringer als die Ausdehnung der zweiten Kurve (24) entlang der Zentralachse (z) ist.

4.  Düse gemäß mindestens einem der Ansprüche 1 bis 3, **dadurch gekennzeichnet, dass** der Radius (r(z)) des Düsenkanals (10) im Bereich der Zentralachse (z) in einer definierten Beziehung

    - zur sich entlang der Zentralachse (z) erstreckenden Länge (a) des Düsenkanals (10),
    - zum Anfangsradius ($r_0$) des Düsenkanals (10) und
    - zum Endradius ($r_7$) des Düsenkanals (10)

    steht.

5.  Düse gemäß Anspruch 4, **dadurch gekennzeichnet, dass** sich der Radius (r(z)) des Düsenkanals (10) im Bereich der Zentralachse (z) mittels der sogenannten Witoszynski-Formel $r(z) = r_0[1-(1-r_0^2/r_7^2)\cdot(1-3z^2/a^2)^2\cdot(1+z^2/a^2)^{-3}]^{-1/2}$ berechnen lässt.

6.  Düse gemäß mindestens einem der Ansprüche 1 bis 5, **dadurch gekennzeichnet, dass** der Düsenkanal (10), vorzugsweise mittels mindestens eines Ringspalts,

    - in mindestens einen ersten, insbesondere in Bezug auf die Zentralachse (z) äußeren, Düsenkanal und
    - in mindestens einen zweiten, insbesondere in Bezug auf die Zentralachse (z) inneren, Düsenkanal

    unterteilt ist.

7.  Düse gemäß Anspruch 6, **dadurch gekennzeichnet, dass** der Gasstrom mindestens einen ersten Gasstrom und mindestens einen zweiten Gasstrom aufweist, wobei

- durch den ersten Düsenkanal der erste Gasstrom und
- durch den zweiten Düsenkanal der zweite Gasstrom

führbar sind.

**8.** Verwendung einer Düse gemäß mindestens einem der Ansprüche 1 bis 7, **dadurch gekennzeichnet, dass** der Gasstrom aus mindestens einem Schneidhilfsgas und/oder aus mindestens einem Schutzgas besteht.

**9.** Verwendung mindestens einer Düse (100) gemäß mindestens einem der Ansprüche 1 bis 7

- bei mindestens einem Autogenverfahren, insbesondere beim Brennschneiden und/oder beim thermischen Spritzen, und/oder
- bei mindestens einem Laserstrahlverfahren, insbesondere beim Laserschweißen, beim Laserschneiden und/oder beim Laserlöten, und/oder
- beim Lichtbogenfügen, insbesondere beim Lichtbogenschweißen, beim Lichtbogenlöten, beim Plasmaschneiden und/oder beim Plasmaschweißen.

**Claims**

**1.** Nozzle (100) with at least one central nozzle channel (10), through which there can be conducted

- at least one beam, intended for an autogenous process, for a laser beam process and/or for arc welding, and
- at least one gas stream,

wherein the contour (20) of the nozzle channel (10) has two curves (22, 24) running one into the other directly or via an intermediate straight line, of which curves (22, 24)

- the first curve (22) in the direction (R) of the gas stream is curved concavely, as seen from the central axis (z) of the nozzle channel (10) extending in the direction (R) of the gas - stream, and
- the second curve (24) in the direction (R) of the gas stream is curved convexly, as seen from the central axis (z) of the nozzle channel (10),
- the nozzle channel (10) has its smallest diameter ($2 \cdot r(z)$) at the gas stream outlet,

**characterized**
**in that** the nozzle channel (10) narrows over the entire length in the direction (R) of the gas stream.

**2.** Nozzle according to Claim 1, **characterized in that**

- the nozzle channel (10) is annular and/or
- the initial radius ($r_0$) of the nozzle channel (10), at the gas stream inlet, is greater than the final radius ($r_7$) of the nozzle channel (10), at the gas stream outlet, and
- the final radius ($r_7$) is the smallest radius ($r(z)$) of the nozzle channel (10).

**3.** Nozzle according to Claim 1 or 2, **characterized in that** the extent of the first curve (22) along the central axis (z) is less than the extent of the second curve (24) along the central axis (z).

**4.** Nozzle according to at least one of Claims 1 to 3, **characterized in that** the radius ($r(z)$) of the nozzle channel (10) in the region of the central axis (z) is in a defined relationship

- with the length (a) of the nozzle channel (10), extending along the central axis (z),
- with the initial radius ($r_0$) of the nozzle - channel (10) and
- with the final radius ($r_7$) of the nozzle channel (10).

**5.** Nozzle according to Claim 4, **characterized in that** the radius ($r(z)$) of the nozzle channel (10) in the region of the central axis (z) can be calculated by means of what is known as the Witoszynski formula $r(z) = r_0 \cdot [1-(1-r_0^2/r_7^2) \cdot (1-3z^2/a^2)^2 \cdot (1+z^2/a^2)^{-3}]^{-1/2}$.

**6.** Nozzle according to at least one of Claims 1 to 5, **characterized in that** the nozzle channel (10) is subdivided, preferably by means of at least one annular gap,

- into at least a first nozzle channel, in particular an outer nozzle channel with respect to the central axis (z), and
- into at least a second nozzle channel, in particular an inner nozzle channel with respect to the central axis (z).

**7.** Nozzle according to Claim 6, **characterized in that** the gas stream comprises at least a first gas stream and at least a second gas stream, wherein

- the first gas stream can be conducted through the first nozzle channel and
- the second gas stream can be conducted through the second nozzle channel.

**8.** Use of a nozzle according to at least one of Claims 1 to 7, **characterized in that** the gas stream consists of at least one auxiliary cutting gas and/or at least one shielding gas.

**9.** Use of at least one nozzle (100) according to at least one of Claims 1 to 7

- in at least one autogenous process, in particular in flame cutting and/or thermal spraying and/or
- in at least one laser beam process, in particular in laser welding, in laser cutting and/or in laser soldering or brazing, and/or
- in arc joining, in particular in arc welding, in arc soldering or brazing, in plasma cutting and/or in plasma welding.

**Revendications**

**1.** Tuyère (100) présentant au moins un canal central (10) de tuyère qui permet d'amener
au moins un jet défini pour un procédé de soudage autogène, de soudage par faisceau laser et/ou de soudage à l'arc lumineux ainsi que
au moins un écoulement de gaz,
le contour (20) du canal (10) de tuyère présentant deux courbes (22, 24) qui se prolongent l'une dans l'autre directement ou par l'intermédiaire d'une droite intermédiaire, tandis que parmi ces courbes (22, 24)
la première courbe (22) orientée dans la direction (R) de l'écoulement de gaz est courbée de manière concave par rapport à l'axe central (z), qui s'étend dans la direction (R) de l'écoulement de gaz, du canal (10) de tuyère et
la deuxième courbe (24), orientée dans la direction (R) de l'écoulement de gaz, est courbée de manière convexe par rapport à l'axe central (z) du canal de tuyère (10),
le canal de tuyère ($2r(z)$) présentant son plus petit diamètre à la sortie de l'écoulement de gaz, **caractérisée en ce que** le canal (10) de tuyère se rétrécit sur toute la longueur dans la direction (R) de l'écoulement de gaz.

**2.** Tuyère selon la revendication 1, **caractérisée en ce que** le canal (10) de tuyère a une forme annulaire et/ou
**en ce que** le rayon initial ($r_0$) du canal (10) de tuyère à l'entrée de l'écoulement de gaz est plus grand que le rayon final ($r_7$) du canal (10) de tuyère à la sortie de l'écoulement de gaz et
**en ce que** le rayon final ($r_7$) est le plus petit rayon ($r(z)$) du canal (10) de tuyère.

**3.** Tuyère selon la revendication 1 ou 2, **caractérisée en ce que** l'extension de la première courbe (22) le long de l'axe central (z) est plus courte que l'extension de la deuxième courbe (24) le long de l'axe central (z).

**4.** Tuyère selon au moins l'une des revendications 1 à 3, **caractérisée en ce que** dans la zone de l'axe central (z), le rayon ($r(z)$) du canal (10) de tuyère forme une relation définie
par rapport à la longueur (a), étendue le long de l'axe central (z), du canal (10) de tuyère,
par rapport au rayon initial ($r_0$) du canal (10) de tuyère et
par rapport au rayon final ($r_7$) du canal (10) de tuyère.

**5.** Tuyère selon la revendication 4, **caractérisée en ce que** dans la zone de l'axe central (z), le rayon ($r(z)$) du canal (10) de tuyère peut être calculé au moyen de la formule dite de Witoszynski $r(z) = r_0[1-(1-r_0^2/r_7^2)(1-3z^2/a^2)^2 (1+z^2/a^2)^{-3}]^{-1/2}$.

**6.** Tuyère selon au moins l'une des revendications 1 à 5, **caractérisée en ce que** le canal (10) de tuyère est divisé, de préférence au moyen d'au moins un interstice annulaire,

en au moins un premier canal de tuyère, en particulier extérieur par rapport à l'axe central (z) et
en au moins un deuxième canal de tuyère, en particulier intérieur par rapport à l'axe central (z).

7. Tuyère selon la revendication 6, **caractérisée en ce que** l'écoulement de gaz présente au moins un premier écoulement de gaz et au moins un deuxième écoulement de gaz,
le premier écoulement de gaz pouvant être amené par le premier canal de tuyère et
le deuxième écoulement de gaz pouvant être amené par le deuxième canal de tuyère.

8. Utilisation d'une tuyère selon au moins l'une des revendications 1 à 7, **caractérisée en ce que** l'écoulement de gaz est constitué d'au moins un gaz auxiliaire de découpe et/ou d'au moins un gaz de protection.

9. Utilisation d'au moins une tuyère (100) selon au moins l'une des revendications 1 à 7
dans au moins un procédé de soudage autogène, en particulier dans l'oxycoupage et/ou la projection thermique et/ou
dans au moins un procédé à faisceau laser, en particulier en soudage au laser, en découpe au laser et/ou en brasage au laser et/ou
en jonction par arc lumineux, en particulier en soudage à l'arc lumineux, en brasage par arc lumineux, en découpe au plasma et/ou en soudage au plasma.

**Fig. 1B**
(= prior art = Stand der Technik)

**Fig. 1A**

**Fig. 2**

EP 1 916 048 B1

**Fig. 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202004011430 U1
- EP 0094984 A
- DD 133537
- DE 4016200 A1
- EP 0458180 A2
- EP 1018394 A2
- JP 56136295 A
- DE 68906429 T2